# EUROPEAN PATENT APPLICATION

(11) **EP 4 683 014 A1**
(43) Date of publication of application: **21.01.2026**
(21) Application number: 24770251.7
(22) Date of filing: 01.02.2024
(51) Int. Cl.: H01M 8/1226, C25B 1/042, C25B 9/00, C25B 9/23, C25B 9/63, C25B 11/031, H01M 4/86, H01M 8/00, H01M 8/04, H01M 8/12, H01M 8/1213, H01M 8/124

(54) **ELECTROCHEMICAL ELEMENT MANUFACTURING METHOD, ELECTROCHEMICAL ELEMENT, ELECTROCHEMICAL MODULE, SOLID OXIDE FUEL CELL, SOLID OXIDE ELECTROLYZER CELL, ELECTROCHEMICAL DEVICE, AND ENERGY SYSTEM**

(30) Priority: 16.03.2023 JP 2023042288
(71) Applicant: Osaka Gas Co., Ltd., Osaka-shi, Osaka 541-0046 (JP)
(72) Inventor: OGAWA Misato, Osaka-shi, Osaka 541-0046 (JP); NAKAO Takayuki, Osaka-shi, Osaka 541-0046 (JP); YAMAZAKI Osamu, Osaka-shi, Osaka 541-0046 (JP); KINOSHITA Sayaka, Osaka-shi, Osaka 541-0046 (JP); SAWAKI Kohei, Osaka-shi, Osaka 541-0046 (JP)
(74) Representative: LBP Lemcke, Brommer & Partner Patentanwälte mbB
(86) International application number: PCT/JP2024/003208
(87) International publication number: WO 2024/190131

(57) **Abstract**

Provided are an electrochemical element, an electrochemical module, a solid oxide fuel cell, a solid oxide electrolytic cell, an electrochemical device, and an energy system, each with improved durability, and a method for manufacturing an electrochemical element with improved durability. A method for manufacturing an electrochemical element E by forming an electrode layer 2 on a metal support 1 having through-holes 1a includes: a preparation step of preparing a paste that contains a material of the electrode layer 2 and a pore-forming material; an application step of applying the paste to a surface of the metal support 1 in such a manner that the electrode layer paste enters the through-holes 1a; a firing step of firing the metal support 1 that has undergone the application step; and a compression step of compressing a layer of the paste that has been applied or the electrode layer 2 that has been fired.

## Description

### Technical Field

The present invention relates to a method for manufacturing an electrochemical element, an electrochemical element, an electrochemical module, a solid oxide fuel cell, a solid oxide electrolytic cell, an electrochemical device, and an energy system.

### Background Art

In conventional electrolyte-supported solid oxide fuel cells (SOFCs) or electrode-supported SOFCs, high temperature firing (e.g., approximately 1400°C) is performed to ensure sufficient adhesion strength between layers and to obtain high-quality electrode layers and electrolyte layers.

In recent years, metal-supported SOFCs, in which a fuel electrode, an air electrode, and an electrolyte layer are supported on a metal substrate, have been developed to enhance robustness.

Patent Document 1 discloses a metal-supported solid oxide fuel cell. FIG. 1 shows a ferritic stainless steel substrate made partially porous by laser drilling thousands of holes through its central region.

### Prior Art Documents

### Patent Documents

Patent Document 1: JP 6794505B

### Disclosure of the Invention

### Problem to be Solved by the Invention

When holes are formed in a metal substrate, the inner surfaces of the holes may expose the bare metal. This may lead to degradation of the substrate when the electrochemical element is used as a fuel cell or an electrolytic cell.

The present invention has been made in view of the above circumstances, and an objective thereof is to provide an electrochemical element, an electrochemical module, a solid oxide fuel cell, a solid oxide electrolytic cell, an electrochemical device, and an energy system, each with improved durability, and a method for manufacturing an electrochemical element with improved durability.

### Means for Solving Problem

A characteristic configuration of a method for manufacturing an electrochemical element for achieving the above objective lies in that the method is for manufacturing an electrochemical element by forming an electrode layer on a metal support that has through-holes, including: a preparation step of preparing a paste that contains a material of the electrode layer and a pore-forming material; an application step of applying the paste to a surface of the metal support in such a manner that the paste enters the through-holes; a firing step of firing the metal support to which the paste has been applied; and a compression step of compressing a layer of the paste that has been applied or the electrode layer that has been fired.

According to the above characteristic configuration, the paste enters the through-holes during the application step. The metal support is fired in the firing step. As a result, the electrode layer fills the interiors of the through-holes in the fired metal support, and the inner surfaces of the through-holes are covered by the electrode layer. Therefore, the durability of the manufactured electrochemical element is improved. In addition, the execution of the compression step reduces the size of the pore-forming material (or the pores formed by the removal of the pore-forming material during firing) in the paste layer, whereas the pore-forming material (or the pores formed by the removal of the pore-forming material during firing) in the paste that has entered the through-holes remains large. Therefore, the porosity of the electrode layer that has entered the through-holes is relatively high, and a decrease in the gas permeability of the through-holes is suppressed. Accordingly, a decrease in the performance of the manufactured electrochemical element is suppressed.

Another characteristic configuration of the method for manufacturing an electrochemical element according to the present invention lies in that the firing step is performed under an atmosphere where oxygen has a partial pressure of 4.0 × 10⁻⁸ bar or higher and 4.0 × 10⁻⁶ bar or lower.

According to the above characteristic configuration, it is not necessary to supply hydrogen during firing, which allows a reduction in the equipment cost required for manufacturing.

A further characteristic configuration of the method for manufacturing an electrochemical element according to the present invention lies in that the firing step is performed under an atmosphere of an inert gas that has been humidified.

According to the above characteristic configuration, an atmosphere with an oxygen partial pressure of 4.0×10⁻⁸ bar or higher and 4.0×10⁻⁶ bar or lower can be achieved using only humidified inert gas, without supplying hydrogen.

A further characteristic configuration of the electrode layer formation method according to the present invention lies in that the inert gas is nitrogen.

Nitrogen is relatively inexpensive and does not require special handling equipment. Therefore, according to the above characteristic configuration, the cost required for forming the electrode layer can be reduced.

Another characteristic configuration of the method for manufacturing an electrochemical element according to the present invention lies in that, in the preparation step, the paste is adjusted to have a viscosity that is low enough for the paste to enter the through-holes during execution of the application step.

According to the above characteristic configuration, execution of the application step is facilitated, and work efficiency can be improved.

Another characteristic configuration of the method for manufacturing an electrochemical element according to the present invention lies in that the firing step is performed at a temperature of 800°C or higher and 1100°C or lower.

If the firing temperature is too low, there is a risk that a high-quality electrode layer will not be formed, whereas if the firing temperature is too high, the metal support may be damaged. However, according to the above characteristic configuration, a high-quality electrode layer can be formed, and damage to the metal support can also be suppressed.

Another characteristic configuration of the method for manufacturing an electrochemical element according to the present invention lies in that the method further includes a degreasing step of removing an oil component before the firing step.

According to the above characteristic configuration, defects in film formation of the electrode layer caused by contamination such as oil or grease can be suppressed, and good quality of the electrochemical element and the like can be ensured.

Another characteristic configuration of the method for manufacturing an electrochemical element according to the present invention lies in that the degreasing step is performed at a temperature of 150°C or higher and 650°C or lower.

If the temperature during degreasing is too low, there is a risk that contamination such as oil, grease, or the like may not be sufficiently removed, whereas if the temperature is too high, the metal support may be damaged or a high-quality electrode layer may not be formed. However, according to the above characteristic configuration, contamination such as oil, grease, or the like can be properly removed, while damage to the metal support can be suppressed, and a high-quality electrode layer can be formed.

A characteristic configuration of an electrochemical element for achieving the above objective lies in that the electrochemical element includes: a metal support having through-holes; and an electrode layer formed on the metal support, wherein the electrode layer includes: a first portion that is a layered portion covering the through-holes; and second portions that are continuous with the first portion and extend from the first portion into the through-holes, and the second portions have a larger porosity than the first portion.

According to the above characteristic configuration, the inner surfaces of the through-holes are covered by the second portions of the electrode layer, and therefore the durability of the electrochemical element is improved. In addition, the porosity of the second portions is relatively high, and therefore a decrease in the gas permeability of the through-holes is suppressed. Therefore, a decrease in the performance of the electrochemical element is suppressed.

Another characteristic configuration of the electrochemical element according to the present invention lies in that the second portions extend into the through-holes beyond half their respective depths.

According to the above characteristic configuration, the durability of the electrochemical element is further improved.

Another characteristic configuration of the electrochemical element according to the present invention lies in that the second portions reach a surface of the metal support opposite to a surface on which the first portion is formed.

According to the above characteristic configuration, the durability of the electrochemical element is further improved.

Another characteristic configuration of the electrochemical element according to the present invention lies in that the first portion has a porosity of 5% or more, and the second portions have a porosity of 20% or more.

According to the above characteristic configuration, the decrease in the gas permeability of the through-holes is further suppressed, and the decrease in the performance of the electrochemical element is also further suppressed.

Another characteristic configuration of the electrochemical element according to the present invention lies in that the electrode layer is formed on a diffusion preventing layer formed on the metal support.

According to the above characteristic configuration, for example, diffusion of Cr or the like from the metal support containing Cr into the electrode layer can be suppressed.

Another characteristic configuration of the electrochemical element according to the present invention lies in that the diffusion preventing layer has a thickness of 3 µm or less.

If the diffusion preventing layer is too thick, there is a risk that the electrical resistance will become excessively high. However, according to the above characteristic configuration, it is possible to achieve both suppression of diffusion of Cr or the like and low electrical resistance.

Another characteristic configuration of the electrochemical element according to the present invention lies in that the electrochemical element includes: an electrolyte layer disposed on the electrode layer; and a counter electrode layer disposed on the electrolyte layer.

According to the above characteristic configuration, the adhesion strength between the metal support and the electrode layer is high, and the electrochemical element exhibits excellent durability and performance.

Another characteristic configuration of the electrochemical element according to the present invention lies in that the electrochemical element further includes an intermediate layer disposed between the electrode layer and the electrolyte layer.

According to the above characteristic configuration, reactions between the constituent material of the electrode layer and the constituent material of the electrolyte layer can be effectively suppressed, and the long-term stability of the performance of the electrochemical element can be improved.

A characteristic configuration of an electrochemical module for achieving the above objective lies in that the electrochemical module includes an assembly of a plurality of electrochemical elements according to the above.

According to the above characteristic configuration, an assembly of a plurality of electrochemical elements enables realization of a compact, high-performance electrochemical module with excellent durability and performance, while reducing material and processing costs. In addition, for example, when the electrochemical module is operated as a fuel cell, a large power output can be obtained.

A characteristic configuration of a solid oxide fuel cell for achieving the above objective lies in that the solid oxide fuel cell includes the above electrochemical element and is configured to cause a power generation reaction in the electrochemical element.

According to the above characteristic configuration, the solid oxide fuel cell can perform a power generation reaction as a solid oxide fuel cell including an electrochemical element with excellent durability and performance. Therefore, a solid oxide fuel cell with high durability and high performance can be obtained.

A characteristic configuration of a solid oxide electrolytic cell for achieving the above objective lies in that the solid oxide electrolytic cell includes the above electrochemical element and is configured to cause an electrolytic reaction in the electrochemical element.

According to the above characteristic configuration, the solid oxide fuel cell can generate gas through an electrolysis reaction as a solid oxide electrolytic cell including an electrochemical element with excellent durability and performance. Therefore, a solid oxide electrolytic cell with high durability and high performance can be obtained.

A characteristic configuration of an electrochemical device for achieving the above objective lies in that the electrochemical device includes at least: the above electrochemical element or the above electrochemical module; and a fuel converter configured to generates a reducible component to be supplied to the electrochemical element or the electrochemical module, or convert a gas containing a reducible component generated by the electrochemical element or the electrochemical module.

According to the above characteristic configuration, when the electrochemical element or the electrochemical module is operated as a fuel cell, hydrogen can be generated from natural gas or the like supplied via existing primary fuel supply infrastructure such as city gas, by means of a fuel converter such as a reformer. As a result, it is possible to realize an electrochemical device including an electrochemical element or an electrochemical module with excellent durability and performance. In addition, since it becomes easier to construct a system that recycles unused fuel gas discharged from the electrochemical module, it is possible to realize a highly efficient electrochemical device.

On the other hand, when the electrochemical element or the electrochemical module is operated as an electrolytic cell, a gas containing water vapor, carbon dioxide, or the like is supplied to the electrode layer, and a voltage is applied between the electrode layer and the counter electrode layer. As a result, in the electrode layer, electrons e⁻ react with water H₂O or carbon dioxide molecules CO₂ to produce hydrogen H₂, carbon monoxide CO, and oxygen ions O²⁻. The generated oxygen ions O²⁻ move through the electrolyte layer to the counter electrode layer. In the counter electrode layer, the oxygen ions O²⁻ release electrons to form oxygen O₂. As a result of the above reactions, when a gas containing water vapor is supplied, water H₂O is decomposed into hydrogen H₂ and oxygen O₂, and when a gas containing carbon dioxide molecules CO₂ is supplied, the carbon dioxide is electrolyzed into carbon monoxide CO and oxygen O₂.

Therefore, when a gas containing both water vapor and carbon dioxide molecules CO₂ is supplied, a fuel converter for synthesizing various compounds such as hydrocarbons from hydrogen and carbon monoxide generated by the above electrolysis in the electrochemical element or the electrochemical module can be provided. This makes it possible to supply the hydrocarbons and the like generated by the fuel converter to the electrochemical element or the electrochemical module, or to extract them outside the system or device to be separately used as fuel or chemical raw materials.

Another characteristic configuration of an electrochemical device for achieving the above objective lies in that the electrochemical device includes at least: the above electrochemical element; and a power converter that extracts power from the electrochemical element or the electrochemical module, or supplies power to the electrochemical element or the electrochemical module.

According to the above characteristic configuration, the power converter can extract the electric power generated by the electrochemical element or the electrochemical module, or supply electric power to the electrochemical element or the electrochemical module. As a result, as described above, the electrochemical element or the electrochemical module acts as a fuel cell or as an electrolytic cell. Therefore, according to the above-described characteristic configuration, an electrochemical device with improved efficiency for converting chemical energy of fuel or the like into electrical energy, or for converting electrical energy into chemical energy of fuel or the like, can be realized. It should be noted that, for example, when an inverter is used as the power converter and the electrochemical device is operated as a fuel cell, it is preferable because the inverter can boost the voltage and convert DC to AC, thereby facilitating the utilization of the electric output obtained from the electrochemical element or the electrochemical module. It is also preferable because it is possible to construct an electrochemical device which, when operated as an electrolytic cell, obtains DC power from an AC power source and supplies it to the electrochemical element or the electrochemical module.

A characteristic configuration of an energy system for achieving the above objective lies in that the energy system includes at least: the above electrochemical device; and a waste heat utilization unit that reuses heat discharged from the electrochemical device.

According to the above characteristic configuration, an energy system with excellent durability, performance, and energy efficiency can be realized. It is also possible to realize a highly energy-efficient hybrid system by combining the electrochemical device with a power generation system that utilizes the combustion heat of unused fuel gas discharged from the electrochemical device.

### Brief Description of the Drawings

FIG. 1 is a diagram showing a schematic configuration of a metal-supported electrochemical element according to an embodiment.
FIG. 2 is a diagram showing a schematic configuration of an electrochemical module according to an embodiment.
FIG. 3 is a diagram showing a schematic configuration of an electrochemical device and an energy system according to an embodiment.
FIG. 4 is an electron microscope photograph of a metal-supported electrochemical element according to an example.
FIG. 5 is a diagram showing a schematic configuration of a metal-supported electrochemical element according to a modified embodiment.
FIG. 6 is a diagram showing a schematic configuration of an electrochemical device and an energy system according to a modified embodiment.
FIG. 7 is a diagram showing a schematic configuration of an electrochemical module according to a modified embodiment.

### Best Mode for Carrying out the Invention

Hereinafter, a method for manufacturing a metal-supported electrochemical element E, a metal-supported electrochemical element E, a solid oxide fuel cell (SOFC), an electrochemical module M, an electrochemical device Y, and an energy system Z according to an embodiment will be described. In this embodiment, the metal-supported electrochemical element E is used as a component of a solid oxide fuel cell that generates power by receiving a supply of a hydrogen-containing fuel gas and air (oxidant gas). In the following description, when referring to the positional relationship or the like between layers, for example, relative to an electrolyte layer 4, a counter electrode layer 6 side may be referred to as "above" or "upper side" and an electrode layer 2 side may be referred to as "below" or "lower side". Additionally, the surface of a metal support 1 on which the electrode layer 2 is formed may be referred to as the "front surface," and the opposite surface may be referred to as the "back surface".

### Electrochemical Element

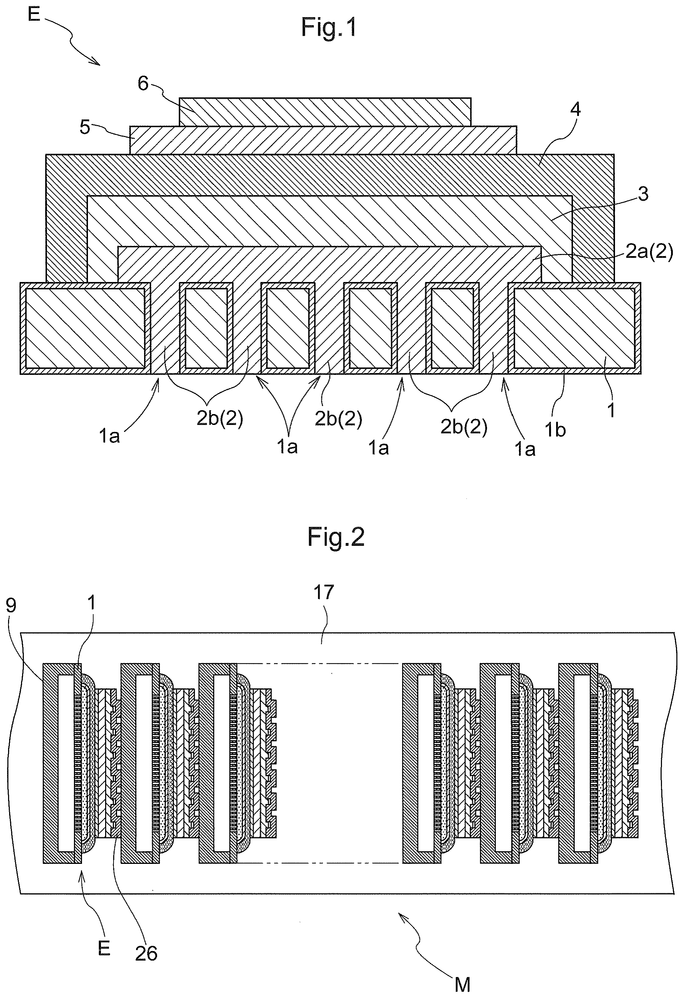

As shown in FIG. 1, the metal-supported electrochemical element E is a metal-supported electrochemical element including: a metal support 1; an electrode layer 2, an intermediate layer 3 formed on the electrode layer 2; an electrolyte layer 4 formed on the intermediate layer 3; a reaction preventing layer 5 formed on the electrolyte layer 4, and a counter electrode layer 6 formed on the reaction preventing layer 5. That is to say, the counter electrode layer 6 is formed above the electrolyte layer 4, and the reaction preventing layer 5 is formed between the electrolyte layer 4 and the counter electrode layer 6. The electrode layer 2 is porous, and the electrolyte layer 4 is dense.

### Metal Support

The metal support 1 supports the electrode layer 2, the intermediate layer 3, the electrolyte layer 4, the reaction preventing layer 5, and the counter electrode layer 6, thereby maintaining the strength of the metal-supported electrochemical element E. That is to say, the metal support 1 serves as a support for the components of the electrochemical element.

A material that has excellent electron conductivity, thermal resistance, oxidation resistance, and corrosion resistance is used as the material of the metal support 1. Examples thereof include ferrite-based stainless steel, austenite-based stainless steel, and a nickel-based alloy. In particular, an alloy containing chromium is favorably used. In this embodiment, the metal support 1 is made of a Fe-Cr based alloy that contains Cr in an amount of 18 mass% or more and 25 mass% or less, but a Fe-Cr based alloy that contains Mn in an amount of 0.05 mass% or more, a Fe-Cr based alloy that contains Ti in an amount of 0.15 mass% or more and 1.0 mass% or less, a Fe-Cr based alloy that contains Zr in an amount of 0.15 mass% or more and 1.0 mass% or less, a Fe-Cr based alloy that contains Ti and Zr, a total content of Ti and Zr being 0.15 mass% or more and 1.0 mass% or less, and a Fe-Cr based alloy that contains Cu in an amount of 0.10 mass% or more and 1.0 mass% or less are particularly favorable.

It should be noted that when the metal support 1 is made of a ferritic stainless steel material, a low-cost and high-strength metal-supported electrochemical element can be realized, which is preferable.

The metal support 1 has a plate shape as a whole. The strength of the metal support 1 need only be sufficient to form the metal-supported electrochemical element E as a support, and from the perspective of ensuring strength, the thickness of the metal support 1 is preferably 0.1 mm or more, more preferably 0.15 mm or more, and even more preferably 0.2 mm or more. From the perspective of cost reduction, the thickness is preferably 2 mm or less, more preferably 1 mm or less, and even more preferably 0.5 mm or less. The metal support 1 has a plurality of through-holes 1a that extend from the surface on which the electrode layer 2 is provided (front surface) to the back surface. In this embodiment, the metal support 1 is a metal plate provided with the plurality of through-holes 1a formed so as to extend from the front surface to the back surface of the metal plate, by mechanical, chemical, or optical perforation processing (hole processing), such as punching, etching, or laser processing. This allows smooth supply of fuel gas and air from the back surface of the metal support 1 toward the electrode layer 2, thereby realizing a high-performance metal-supported electrochemical element.

It should be noted that the plate-shaped metal support 1 can also be deformed, for example, into a box shape or a cylindrical shape by bending or the like for use.

A metal oxide layer 1b serving as a diffusion preventing layer is provided on the surface of the metal support 1. That is to say, the diffusion preventing layer is formed between the metal support 1 and the electrode layer 2 described later. The metal oxide layer 1b is provided not only on the surface of the metal support 1 exposed to the outside but also on the contact surface (interface) with the electrode layer 2 and on the inner surfaces of the through-holes 1a. This metal oxide layer 1b suppresses element interdiffusion between the metal support 1 and the electrode layer 2. For example, when ferritic stainless steel containing chromium is used for the metal support 1, the metal oxide layer 1b is primarily composed of chromium oxide. The metal oxide layer 1b, primarily composed of chromium oxide, suppresses the diffusion of chromium atoms and the like from the metal support 1 to the electrode layer 2 or the electrolyte layer 4. The thickness of the metal oxide layer 1b need only be sufficient to achieve both high diffusion preventing performance and low electrical resistance, and the maximum thickness thereof is preferably 3 µm or less. It is more preferable that the thickness be on the submicron order, and specifically, that the average thickness be approximately 0.3µm or more and approximately 0.7µm or less, for example. The minimum thickness is preferably approximately 0.1 µm or more. The maximum thickness is preferably approximately 1.1 µm or less.

The metal oxide layer 1b can be formed using various techniques, but a method of oxidizing the surface of the metal support 1 to form a metal oxide is preferably used. The metal oxide layer 1b may also be formed on the surface of the metal support 1 using a PVD technique such as a sputtering technique or a PLD technique, a CVD technique, a spray coating technique (e.g., a thermal spraying technique, an aerosol deposition technique, an aerosol gas deposition technique, a powder jet deposition technique, a particle jet deposition technique, or a cold spraying technique), or the like, or by plating and oxidation treatment. Furthermore, the metal oxide layer 1b may include, for example, a spinel phase with high electrical conductivity.

### Electrode Layer

As shown in FIG. 1, the electrode layer 2 can be provided as a thin layer on the surface of the metal support 1 so as to cover the region of the metal support 1 where the through-holes 1a are formed. When the electrode layer 2 is formed as a thin layer, the thickness thereof can be, for example, approximately 1 µm to approximately 100 µm, preferably approximately 5 µm to approximately 50 µm. By setting such a thickness, it is possible to reduce the amount of expensive electrode layer material used and achieve cost reduction, while still ensuring sufficient electrode performance. The region of the metal support 1 where the through-holes 1a are provided is entirely covered by the electrode layer 2. That is to say, the through-holes 1a are formed inside the region of the metal support 1 where the electrode layer 2 is formed. In other words, all the through-holes 1a are provided so as to face the electrode layer 2.

As the material for the electrode layer 2, at least one selected from nickel-based compounds, ceria-based oxides, zirconia-based oxides, and perovskite-based composite oxides, or a combination thereof, can be used. For example, a composite material such as NiO-GDC, Ni-GDC, NiO-YSZ, Ni-YSZ, CuO-CeO₂, or Cu-CeO₂ can be used. In these examples, GDC, YSZ, and CeO₂ can be referred to as the aggregate of the composite material. The electrode layer 2 formed using the above materials functions as an anode. Using these materials forms a nanocomposite structure, which enables the electrode layer 2 to have sufficient electrode performance.

It should be noted that it is preferable to form the electrode layer 2 using low-temperature firing (not performing firing treatment in a high temperature range of higher than 1100°C, but rather performing a wet process using firing treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Due to these processes that can be used in a low temperature range, a favorable electrode layer 2 is obtained without using firing in a high temperature range of higher than 1100°C, for example. Therefore, this is preferable due to being able to prevent damage to the metal support 1, suppress element diffusion between the metal support 1 and the electrode layer 2, and realize a metal-supported electrochemical element that has excellent durability. Furthermore, using low-temperature firing makes it possible to facilitate handling of raw materials and is thus more preferable.

In this embodiment, the electrode layer 2 includes a first portion 2a, which is a layered portion covering the through-holes 1a, and second portions 2b, which are continuous with the first portion 2a and extend from the first portion 2a into the through-holes 1a. In the example in FIG. 1, the second portions 2b reach the surface (back surface) of the metal support 1 opposite to the surface (front surface) on which the first portion 2a is formed. The inner surfaces of the through-holes 1a are covered by the second portions 2b of the electrode layer 2. Therefore, the durability of the metal support 1 is improved, and the durability of the metal-supported electrochemical element E is improved.

The electrode layer 2 has a plurality of pores in its interior and on its surface in order to provide gas permeability. That is to say, the electrode layer 2 is formed as a porous layer. The porosity of the electrode layer 2 is preferably 5% or more, and more preferably 5% or more and 60% or less, from the perspective of forming a three-dimensional gas diffusion path. Furthermore, the electrode layer 2 is formed, for example, so that the density thereof is more than 40% and less than 95%. The pore size can be appropriately selected to facilitate smooth electrochemical reactions. It should be noted that the density refers to the proportion of the volume of the material constituting the layer to the total volume of the space, which can be expressed as (1 - porosity), and is equivalent to the relative density.

In this embodiment, the electrode layer 2 is formed such that the porosity of the second portions 2b is greater than the porosity of the first portion 2a. It is preferable that the porosity of the first portion 2a is 5% or more, and the porosity of the second portions 2b is 20% or more. In other words, it is preferable that the density of the first portion 2a is less than 95%, and the density of the second portions 2b is less than 80%. The size (width) of the pores in the second portions 2b is preferably 15 µm or less, more preferably 10 µm or less, and even more preferably 5 µm or less.

### Intermediate Layer

As shown in FIG. 1, the intermediate layer 3 can be formed as a thin layer on the electrode layer 2, covering the electrode layer 2. Thus, in order to form the dense electrolyte layer 4 on the porous electrode layer 2, the intermediate layer 3 is disposed between them to continuously connect the two layers and serve as a buffer layer that alleviates various stresses during the manufacturing and operation of the metal-supported electrochemical element E. Therefore, the intermediate layer 3 is intentionally formed to have a lower density than the electrolyte layer 4. Furthermore, the intermediate layer 3 is intentionally formed to have a higher density than the electrode layer 2. As a result, even when the porous electrode layer 2 and the dense electrolyte layer 4 are formed on the metal support 1, the intermediate layer 3 functions to absorb and alleviate various stresses between the layers, thereby contributing to improved performance, reliability, and stability of the metal-supported electrochemical element E. When it is formed as a thin layer, the thickness can be set to approximately 1 µm to 100 µm, preferably approximately 2 µm to 50 µm, and more preferably approximately 4 µm to 25 µm, for example. This thickness makes it possible to ensure sufficient performance while also achieving cost reduction by reducing the amount of expensive intermediate layer material that is used.

YSZ (yttria-stabilized zirconia), SSZ (scandium-stabilized zirconia), GDC (gadolinium-doped ceria), YDC (yttrium-doped ceria), SDC (samarium-doped ceria), or the like can be used as the material of the intermediate layer 3. In particular, ceria-based ceramics are favorably used.

It is preferable to form the intermediate layer 3 using low-temperature firing (not performing firing treatment in a high temperature range of higher than 1100°C, but rather performing a wet process using firing treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Due to these film formation processes that can be used in a low temperature range, an intermediate layer 3 is obtained without using firing in a high temperature range of higher than 1100°C, for example. Therefore, it is possible to prevent damage to the metal support 1, suppress element interdiffusion between the metal support 1 and the electrode layer 2, and realize a metal-supported electrochemical element E that has excellent durability. Furthermore, using low-temperature firing makes it possible to facilitate handling of raw materials and is thus more preferable.

It should be noted that, in this embodiment, the intermediate layer 3 is preferably an oxygen ion (oxide ion) conductor or a mixed conductor having conductivity for both oxygen ions (oxide ions) and electrons. An intermediate layer 3 with such properties is suitable for application to the metal-supported electrochemical element E.

### Electrolyte Layer

As shown in FIG. 1, the electrolyte layer 4 is formed as a thin layer on the intermediate layer 3. The electrolyte layer 4 can also be formed as a thin film with a thickness of 10 µm or less. In this embodiment, the electrolyte layer 4 is provided in such a manner as to extend over (span across) both the intermediate layer 3 and the metal support 1. By employing such a configuration and joining the electrolyte layer 4 to the metal support 1, the metal-supported electrochemical element E can be made highly robust as a whole.

In addition, the electrolyte layer 4 is provided on the front surface of the metal support 1 over a region that is larger than the region where the through-holes 1a are formed. That is to say, the through-holes 1a are formed inside the regions of the metal support 1 where the electrolyte layer 4 is formed. This makes it possible to suppress gas leakage from the electrode layer 2 and the intermediate layer 3 around the periphery of the electrolyte layer 4. Specifically, when the metal-supported electrochemical element E is used as a constitutional element of a SOFC, gas is supplied from the back side of the metal support 1 through the through-holes 1a to the electrode layer 2 during the operation of the SOFC. In a region where the electrolyte layer 4 is in contact with the metal support 1, leakage of gas can be suppressed without providing another member such as a gasket. It should be noted that, although the entire vicinity of the electrode layer 2 is covered by the electrolyte layer 4 in this embodiment, a configuration in which the electrolyte layer 4 is provided on the electrode layer 2 and the intermediate layer 3 and a gasket or the like is provided in its vicinity may also be adopted.

As the material for the electrolyte layer 4, electrolyte materials that conduct oxygen ions, such as YSZ (yttria-stabilized zirconia), SSZ (scandium-stabilized zirconia), GDC (gadolinium-doped ceria), YDC (yttrium-doped ceria), SDC (samarium-doped ceria), or LSGM (strontium- and magnesium-doped lanthanum gallate), or electrolyte materials that conduct hydrogen ions, such as perovskite-type oxides, can be used. In particular, zirconia-based ceramics are preferably used. When the electrolyte layer 4 is made of zirconia-based ceramics, the operating temperature of the SOFC using the metal-supported electrochemical element E can be made higher than that of SOFCs using ceria-based ceramics or various hydrogen ion-conducting materials. For example, as in the present embodiment, when the metal-supported electrochemical element E is used in an SOFC, it is possible to construct a highly efficient SOFC system in which the heat generated in the SOFC cell stack is utilized for reforming the fuel gas, by adopting a system configuration in which: a material such as YSZ, capable of exhibiting high electrolyte performance even at high temperatures around 650°C or higher, is used for the electrolyte layer 4; a hydrocarbon-based fuel such as city gas or LPG is used as the primary fuel; and the primary fuel is reformed by water vapor reforming or the like to produce the anode gas for the SOFC. It should be noted that, in this embodiment, the electrolyte layer 4 contains stabilized zirconia.

It is preferable to form the electrolyte layer 4 using low-temperature firing (not performing firing treatment in a high temperature range of higher than 1100°C, but rather performing a wet process using firing treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. Due to these film formation processes that can be used in a low temperature range, an electrolyte layer 4 that is dense and has high air-tightness and gas barrier properties is obtained without using firing in a high temperature range of higher than 1100°C, for example. Therefore, it is possible to prevent damage to the metal support 1, suppress element diffusion between the metal support 1 and the electrode layer 2, and realize a metal-supported electrochemical element E that has excellent performance and durability. In particular, using low-temperature firing, a spray coating technique, or the like makes it possible to realize a low-cost element and is thus preferable. Furthermore, using a spray coating technique makes it easy to obtain, in a low temperature range, an electrolyte layer 4 that is dense and has high air-tightness and gas barrier properties, and is thus more preferable.

The electrolyte layer 4 is given a dense configuration in order to block gas leakage of anode gas and cathode gas and exhibit high ion conductivity. The electrolyte layer 4 preferably has a denseness of 90% or more, more preferably 95% or more, and even more preferably 98% or more. When the electrolyte layer 4 is formed as a uniform layer, the denseness is preferably 95% or more, and more preferably 98% or more. When the electrolyte layer 4 has a multilayer configuration, at least a portion thereof preferably includes a layer (dense electrolyte layer) having a denseness of 98% or more, and more preferably a layer (dense electrolyte layer) having a denseness of 99% or more. The reason for this is that an electrolyte layer that is dense and has high air-tightness and gas barrier properties can be easily formed due to such a dense electrolyte layer being included as a portion of the electrolyte layer even when the electrolyte layer has a multilayer configuration.

### Reaction preventing layer

The reaction preventing layer 5 can be formed as a thin layer on the electrolyte layer 4. When it is formed as a thin layer, the thickness can be set to approximately 1 µm to 100 µm, preferably approximately 2 µm to 50 µm, and more preferably approximately 3 µm to 15 µm, for example. This thickness makes it possible to ensure sufficient performance while also achieving cost reduction by reducing the amount of expensive reaction preventing layer material that is used.

The material of the reaction preventing layer 5 need only be capable of preventing reactions between the component of the electrolyte layer 4 and the component of the counter electrode layer 6. For example, a ceria-based material or the like is used. Materials that contain at least one element selected from the group consisting of Sm, Gd, and Y are favorably used as the material of the reaction preventing layer 5. It is preferable that at least one element selected from the group consisting of Sm, Gd, and Y is contained, and the total content of these elements is 1.0 mass% or more and 10 mass% or less. Introducing the reaction preventing layer 5 between the electrolyte layer 4 and the counter electrode layer 6 effectively suppresses reactions between the material constituting the counter electrode layer 6 and the material constituting the electrolyte layer 4 and makes it possible to improve long-term stability in the performance of the meta-supported electrochemical element E

The reaction preventing layer 5 preferably has oxygen ion (oxide ion) conductivity. It is more preferable that it is a mixed conductor with both oxygen ion (oxide ion) and electron conductivity. A reaction preventing layer 5 with such properties is suitable for application to the metal-supported electrochemical element E.

Forming the reaction preventing layer 5 using, as appropriate, a method through which the reaction preventing layer 5 can be formed at a treatment temperature of 1100°C or lower makes it possible to suppress damage to the metal support 1, suppress element diffusion between the metal support 1 and the electrode layer 2, and realize a metal-supported electrochemical element E that has excellent performance and durability, and is thus preferable. For example, the reaction preventing layer 5 can be formed using, as appropriate, low-temperature firing (not performing firing treatment in a high temperature range of higher than 1100°C, but rather performing a wet process using firing treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PVD technique (e.g., a sputtering technique or a pulse laser deposition technique), a CVD technique, or the like. In particular, using low-temperature firing, a spray coating technique, or the like makes it possible to realize a low-cost element and is thus preferable. Furthermore, using low-temperature firing makes it possible to facilitate handling of raw materials and is thus more preferable.

### Counter Electrode Layer

The counter electrode layer 6 can be formed as a thin layer on the reaction preventing layer 5. When it is formed as a thin layer, the thickness can be set to approximately 1 µm to 100 µm, and preferably approximately 5 µm to 50 µm, for example. This thickness makes it possible to ensure sufficient electrode performance while also achieving cost reduction by reducing the amount of expensive counter electrode layer material that is used.

A complex oxide such as LSCF or LSM, or a ceria-based oxide, or a mixture thereof can be used as the material of the counter electrode layer 6, for example. In particular, it is preferable that the counter electrode layer 6 includes a perovskite oxide containing two or more elements selected from the group consisting of La, Sr, Sm, Mn, Co, and Fe. The counter electrode layer 6 constituted by the above-mentioned material functions as a cathode.

It should be noted that forming the counter electrode layer 6 using, as appropriate, a method through which the counter electrode layer 6 can be formed at a treatment temperature of 1100°C or lower makes it possible to suppress damage to the metal support 1, suppress element interdiffusion between the metal support 1 and the electrode layer 2, and realize a metal-supported electrochemical element E that has excellent performance and durability, and is thus preferable. For example, the counter electrode layer 6 can be formed using, as appropriate, low-temperature firing (not performing firing treatment in a high temperature range of higher than 1100°C, but rather performing a wet process using firing treatment in a low temperature range, for example), a spray coating technique (a technique such as a thermal spraying technique, an aerosol deposition technique, an aerosol gas deposition technique, a powder jet deposition technique, a particle jet deposition technique, or a cold spraying technique), a PDV technique (e.g., a sputtering technique or a pulse laser deposition technique), a CVD technique, or the like. In particular, using low-temperature firing, a spray coating technique, or the like makes it possible to realize a low-cost element and is thus preferable. Furthermore, using low-temperature firing makes it possible to facilitate handling of raw materials and is thus more preferable.

### Method for Manufacturing Metal-Supported Electrochemical Element

Next, a method for manufacturing the metal-supported electrochemical element E will be described. The method for manufacturing the metal-supported electrochemical element E according to this embodiment includes an electrode layer formation step, an intermediate layer formation step, an electrolyte layer formation step, a reaction preventing layer formation step, and a counter electrode layer formation step, with the electrode layer formation step including a preparation step, an application step, a firing step, and a compression step.

### Electrode Layer Formation Step

In the electrode layer formation step, the electrode layer 2 is formed as a thin film on the metal support 1. The electrode layer 2 can be formed using the film formation methods described above, but it is preferable to use a film formation method usable in a low-temperature range of 1100°C or lower to suppress degradation of the metal support 1.

When the electrode layer formation step is performed using a low-temperature firing method, it is specifically carried out as follows.

First, a paste containing the material for the electrode layer 2 and a pore-forming material is prepared (preparation step). Specifically, a material paste is prepared by mixing the material powder for the electrode layer 2, a pore-forming material, and a solvent (dispersion medium). The pore-forming material is, for example, a spherical polymer or resin powder, such as an acrylic resin. In the preparation step, the viscosity of the paste is adjusted to be low enough for the paste to enter the through-holes 1a during execution of the application step. The viscosity of the paste is adjusted by increasing or decreasing the amount of solvent. The optimal viscosity is determined based on the material of the electrode layer 2, the size and spacing of the through-holes 1a, and the like.

Next, the prepared paste is applied to the surface (front surface) of the metal support 1 so that the paste enters the through-holes 1a (application step). The application of the paste may be performed multiple times so that the paste sufficiently enters the through-holes 1a.

Subsequently, the applied paste layer is compressed (compression step). Compression (compression molding) of the paste layer can be performed, for example, by CIP (Cold Isostatic Pressing) molding, roll pressing molding, or RIP (Rubber Isostatic Pressing) molding. This step may be omitted. That is to say, the applied paste layer may not be compressed, and the electrode layer 2 fired in the firing step may be compressed later.

A degreasing step is performed to remove oil components. The degreasing step is preferably a process of heating the metal support 1 at a temperature of 150°C or higher and 650°C or lower. By performing the degreasing step, it is possible to suppress film formation defects in the electrode layer 2 caused by contaminants such as grease. It should be noted that the degreasing step may be omitted.

The metal support 1 to which the paste has been applied is fired (firing step). The firing step is performed at 800°C or higher and 1100°C or lower to suppress degradation of the metal support 1. In particular, it is preferably performed at 1050°C or less, and more preferably at 1000°C or less. The firing step is performed in an atmosphere adjusted to have an oxygen partial pressure of 4.0 × 10⁻⁸ bar or higher and 4.0 × 10⁻⁶ bar or lower. By performing the firing step in an atmosphere with an oxygen partial pressure of 4.0 × 10⁻⁸ bar or higher and 4.0 × 10⁻⁶ bar or lower, a robust electrode layer can be formed without using hydrogen. The oxygen partial pressure is preferably 7.5 × 10⁻⁸ bar or higher and 3.0 × 10⁻⁶ bar or lower, and more preferably 2.9 × 10⁻⁷ bar or higher and 1.5 × 10⁻⁶ bar or lower.

A smoothing step may be performed before or after the firing step, to smooth the surface of the electrode layer 2. The smoothing step can be performed by lapping molding, leveling treatment, surface cutting, polishing treatment, or the like. The smoothing of the surface of the electrode layer 2 may also be achieved through the compression step.

During the firing step, the metal oxide layer 1b (diffusion preventing layer) may be formed on the surface of the metal support 1. A step of forming the diffusion preventing layer may be separately performed before the firing step.

When the compression step is performed before the firing step, the pore-forming material in the paste layer is subjected to pressure. As a result, the pore-forming material in the paste layer becomes smaller due to decomposition or deformation. On the other hand, the paste that has entered the through-holes 1a is not subjected to pressure, so the pore-forming material remains large. When the firing step is performed in this state, the porosity of the second portions 2b (the portions that have entered the through-holes 1a) becomes greater than the porosity of the first portion 2a (the layered portion).

### Intermediate Layer Formation Step

In the intermediate layer formation step, the intermediate layer 3 is formed as a thin layer on the electrode layer 2, covering the electrode layer 2. The intermediate layer 3 can be formed using the film formation methods described above, but it is preferable to use a film formation method usable in a low-temperature range of 1100°C or lower to suppress degradation of the metal support 1.

When the intermediate layer formation step is performed using a low-temperature firing method, it is specifically carried out as follows. First, a material paste is prepared by mixing the material powder for the intermediate layer 3 and a solvent (dispersion medium), and it is applied to the front surface of the electrode layer 2. The intermediate layer 3 is then compression molded (intermediate layer smoothing step, compression step) and fired at 1100°C or less (intermediate layer firing step). Compression molding of the intermediate layer 3 can be performed, for example, by CIP molding, roll pressing molding, or RIP molding. In addition, firing of the intermediate layer 3 is preferably performed at a temperature of 800°C or higher and 1100°C or lower. The reason for this is that this temperature makes it possible to form an intermediate layer 3 that has high strength while suppressing damage to and deterioration of the metal support 1. It is more preferable to perform firing of the intermediate layer 3 at a temperature of 1050°C or lower, and more preferably 1000°C or lower. The reason for this is that the lower the firing temperature of the intermediate layer 3 is, the more likely it is to further suppress damage to and deterioration of the metal support 1 when forming the metal-supported electrochemical element E. The order in which the intermediate layer smoothing step and the intermediate layer firing step are performed can be changed.

It should be noted that lapping molding, leveling treatment, surface cutting treatment, surface polishing treatment, or the like can also be performed as the intermediate layer smoothing step.

### Electrolyte Layer Formation Step

In the electrolyte layer formation step, the electrolyte layer 4 is formed as a thin layer on the intermediate layer 3, covering the electrode layer 2 and the intermediate layer 3. The electrolyte layer 4 can be formed using the film formation methods usable in a low-temperature range described above, but it is preferable to use a spray coating technique. In particular, to form a high-quality electrolyte layer 4 that is dense and has high air-tightness and gas barrier performance in a temperature range of 1100°C or less, it is more preferable to use an aerosol deposition technique, an aerosol gas deposition technique, a powder jet deposition technique, or a particle jet deposition technique. In this embodiment, the electrolyte layer 4 is formed using an aerosol deposition technique. Specifically, aerosolized material powder for the electrolyte layer 4 (in this embodiment, fine powder of stabilized zirconia such as YSZ or SSZ) is sprayed onto the intermediate layer 3 on the metal support 1 to form the electrolyte layer 4.

### Reaction Preventing Layer Formation Step

In the reaction preventing layer formation step, the reaction preventing layer 5 is formed as a thin layer on the electrolyte layer 4. The reaction preventing layer 5 can be formed using the film formation methods described above, but it is preferable to use a film formation method usable in a low-temperature range of 1100°C or less to suppress degradation of the metal support 1.

### Counter Electrode Layer Formation Step

In the counter electrode layer formation step, the counter electrode layer 6 is formed as a thin layer on the reaction preventing layer 5. The counter electrode layer 6 can be formed using the film formation methods described above, but it is preferable to use a film formation method usable in a low-temperature range of 1100°C or less to suppress degradation of the metal support 1.

When the intermediate layer smoothing step (compression step) is performed in the intermediate layer formation step, the first portion 2a of the electrode layer 2 covering the metal support 1 is subjected to significant pressure. On the other hand, the electrode layer 2 (second portions 2b) that has entered the through-holes 1a are subjected to less pressure. As a result, the porosity of the second portions 2b (the portions that have entered the through-holes 1a) becomes greater than the porosity of the first portion 2a (the layered portion). It should be noted that the compression step (the step of compressing the fired electrode layer 2) may also be performed in the electrolyte layer formation step or the counter electrode layer formation step.

### Solid Oxide Fuel Cell

By adopting the above-described configuration of the metal-supported electrochemical element E, the metal-supported electrochemical element E can be used as a power generation cell for a solid oxide fuel cell. That is to say, a solid oxide fuel cell that causes a power generation reaction in the metal-supported electrochemical element E can be realized.

For example, a fuel gas containing hydrogen as a first gas is supplied to the electrode layer 2 through the through-holes 1a from the back surface of the metal support 1, while air as a second gas is supplied to the counter electrode layer 6, and the temperature is maintained at a predetermined operating temperature (e.g., 500°C or higher and 900°C or lower). When an electrolyte material that conducts oxygen ions is used for the electrolyte layer 4, oxygen O₂ in the air reacts with electrons e⁻ in the counter electrode layer 6, producing oxygen ions O²⁻. These oxygen ions O²⁻ move through the electrolyte layer 4 to the electrode layer 2. In the electrode layer 2, hydrogen H₂ in the supplied fuel gas reacts with the oxygen ions O²⁻, producing water H₂O and electrons e⁻.

When an electrolyte material that conducts hydrogen ions is used for the electrolyte layer 4, hydrogen H₂ in the fuel gas supplied to the electrode layer 2 releases electrons e⁻, producing hydrogen ions H⁺. These hydrogen ions H⁺ move through the electrolyte layer 4 to the counter electrode layer 6. In the counter electrode layer 6, oxygen O₂ in the air, hydrogen ions H⁺, and electrons e⁻ react to produce water H₂O.

Through the above reactions, an electromotive force is generated as an electrochemical output between the electrode layer 2 and the counter electrode layer 6. In this case, the electrode layer 2 functions as the fuel electrode (anode) of the fuel cell, and the counter electrode layer 6 functions as the air electrode (cathode).

It is more preferable that the solid oxide fuel cell be operable at a temperature of 650°C or higher under rated operation, because in a fuel system using a hydrocarbon-based gas such as city gas as the primary fuel, it becomes possible to construct a system in which the waste heat from the fuel cell can be used to supply the heat required for converting the raw fuel into hydrogen, thereby improving the power generation efficiency of the fuel cell system. Furthermore, it is more preferable that the solid oxide fuel cell be operated at a temperature of 900°C or lower under rated operation, because this enhances the effect of suppressing Cr volatilization from the metal-supported electrochemical element E, and it is even more preferable that the solid oxide fuel cell be operated at a temperature of 850°C or lower under rated operation, as this further enhances the Cr volatilization suppression effect.

### Electrochemical Module

Next, the electrochemical module M will be described with reference to FIG. 2. The electrochemical module M includes the metal-supported electrochemical elements E in each of which a tubular support is formed by the metal support 1 and a U-shaped member 9 attached to the back surface of the metal support 1. The electrochemical module M is formed by stacking (assembling) these metal-supported electrochemical elements E with current collecting members 26 sandwiched between them. In this embodiment, the current collecting members 26 are joined to the counter electrode layers 6 of the metal-supported electrochemical elements E and to the U-shaped members 9, thereby electrically connecting them. However, it is also possible to adopt a configuration in which the counter electrode layers 6 and the U-shaped members 9 are directly electrically connected.

The electrochemical module M includes a gas manifold 17, a terminal member, and a current extraction unit. One open end of the tubular supports of the plurality of stacked metal-supported electrochemical elements E is connected to the gas manifold 17 and receives gas supply from the gas manifold 17. The supplied gas flows through the interiors of the tubular supports and is supplied to the electrode layers 2 through the through-holes 1a of the metal supports 1.

### Electrochemical Device and Energy System

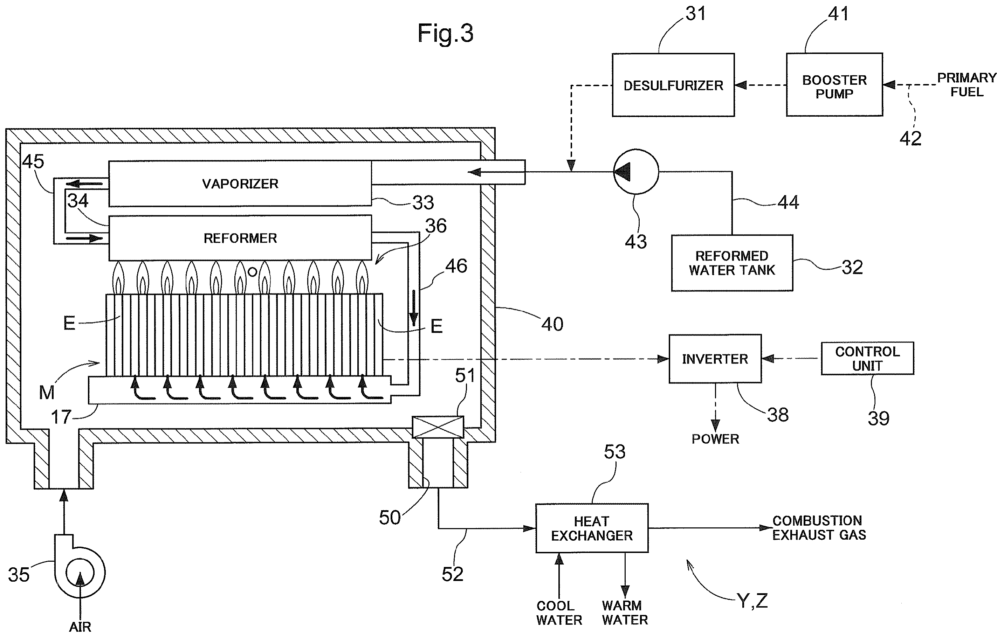

Next, the electrochemical device Y and the energy system Z constructed using the above-described electrochemical module M will be described with reference to FIG. 3.

As shown in FIG. 3, the energy system Z includes the electrochemical device Y and a heat exchanger 53 that serves as a waste heat utilization unit that reuses heat discharged from the electrochemical device Y.

In this embodiment, the electrochemical device Y includes the electrochemical module M, a fuel converter constituted by a desulfurizer 31 and a reformer 34, a fuel supply unit 46 that supplies a fuel gas containing a reducible component generated by the fuel converter to the electrochemical module M, and an inverter 38 that is a type of power converter serving as an output unit that extracts power from the electrochemical module M.

More specifically, the electrochemical device Y includes the desulfurizer 31, a reformed water tank 32, a vaporizer 33, the reformer 34, a blower 35, a combustion unit 36, the inverter 38, a control unit 39, the electrochemical module M, a storage container 40, and so on.

The desulfurizer 31 removes sulfur compound components contained in a hydrocarbon-based raw fuel such as city gas (i.e., performs desulfurization). When a sulfur compound is contained in the raw fuel, the inclusion of the desulfurizer 31 makes it possible to suppress the influence that the sulfur compound has on the reformer 34 or the metal-supported electrochemical elements E. The vaporizer 33 produces water vapor from reformed water supplied from the reformed water tank 32. The reformer 34 uses the water vapor produced by the vaporizer 33 to perform water vapor reformation of the raw fuel desulfurized by the desulfurizer 31, thus producing reformed gas containing hydrogen.

The electrochemical module M generates power by causing an electrochemical reaction to occur with use of the reformed gas supplied from the reformer 34 and air supplied from the blower 35. The combustion unit 36 mixes the reaction exhaust gas discharged from the electrochemical module M with air, and burns combustible components in the reaction exhaust gas.

The electrochemical module M includes a plurality of metal-supported electrochemical elements E and the gas manifold 17. The metal-supported electrochemical elements E are arranged side-by-side and electrically connected to each other, and one end portion (lower end portion) of each of the electrochemical elements E is fixed to the gas manifold 17. The metal-supported electrochemical elements E generate power by causing an electrochemical reaction to occur between the reformed gas supplied via the gas manifold 17 and air supplied from the blower 35.

The inverter 38 adjusts the power output from the electrochemical module M to obtain the same voltage and frequency as electrical power received from a commercial system (not shown). The control unit 39 controls the operation of the electrochemical device Y and the energy system Z.

The vaporizer 33, the reformer 34, the electrochemical module M, and the combustion unit 36 are stored in the storage container 40. The reformer 34 performs reformation processing on the raw fuel with use of combustion heat produced by the combustion of reaction exhaust gas in the combustion unit 36.

The raw fuel is supplied to the desulfurizer 31 via a raw fuel supply passage 42, due to the operation of a booster pump 41. The reformed water in the reformed water tank 32 is supplied to the vaporizer 33 via a reformed water supply passage 44, due to the operation of a reformed water pump 43. The raw fuel supply passage 42 merges with the reformed water supply passage 44 at a location on the downstream side of the desulfurizer 31, and the reformed water and the raw fuel, which have been merged outside of the storage container 40, are supplied to the vaporizer 33 provided in the storage container 40.

The reformed water is vaporized by the vaporizer 33 to produce water vapor. The raw fuel, which contains the water vapor produced by the vaporizer 33, is supplied to the reformer 34 via a vapor-containing raw fuel supply passage 45. In the reformer 34, the raw fuel is subjected to water vapor reformation, thus producing reformed gas that includes hydrogen gas as a main component (first gas including a reducible component). The reformed gas produced in the reformer 34 is supplied to the gas manifold 17 of the electrochemical module M via a fuel supply unit 46.

The reformed gas supplied to the gas manifold 17 is distributed among the metal-supported electrochemical elements E, and is supplied to the metal-supported electrochemical elements E from the lower ends, which are the connection portions where the metal-supported electrochemical elements E and the gas manifold 17 are connected to each other. Mainly the hydrogen (reducible component) in the reformed gas is used in the electrochemical reaction in the metal-supported electrochemical elements E. The reaction exhaust gas, which contains remaining hydrogen gas not used in the reaction, is discharged from the upper ends of the metal-supported electrochemical elements E to the combustion unit 36.

The reaction exhaust gas is burned in the combustion unit 36, and combustion exhaust gas is discharged from a combustion exhaust gas outlet 50 to the outside of the storage container 40. A combustion catalyst unit 51 (e.g., a platinum-based catalyst) is provided in the combustion exhaust gas outlet 50, and reducible components such as carbon monoxide and hydrogen contained in the combustion exhaust gas are removed by combustion. The combustion exhaust gas discharged from the combustion exhaust gas outlet 50 is sent to the heat exchanger 53 via a combustion exhaust gas discharge passage 52.

The heat exchanger 53 uses supplied cool water to perform heat exchange on the combustion exhaust gas produced by combustion in the combustion unit 36, thus producing warm water. In other words, the heat exchanger 53 operates as a waste heat management unit that reuses heat discharged from the electrochemical device Y.

It should be noted that instead of the waste heat management unit, it is possible to provide a reaction exhaust gas using unit that uses the reaction exhaust gas that is discharged from (not burned in) the electrochemical module M. The reaction exhaust gas contains remaining hydrogen gas that was not used in the reaction in the metal-supported electrochemical elements E. In the reaction exhaust gas using unit, the remaining hydrogen gas is used to perform power generation by heat utilization through combustion, a fuel cell, or the like, thus achieving effective energy utilization.

### Examples and Comparative Examples

Hereinafter, examples and comparative examples will be described.

### Electrode Layer Formation

As an example, a metal support 1 was formed by forming a plurality of through-holes 1a by laser processing in a region with a radius of 2.5 mm from the center of a circular metal plate having a thickness of 0.3 mm and a diameter of 25 mm.

Next, a paste was prepared by mixing 60 mass% NiO powder and 40 mass% GDC powder, adding an organic binder, an organic solvent (dispersion medium), and a pore-forming material (preparation step). The viscosity of the paste was adjusted to be low enough for the paste to enter the through-holes 1a during the application step by screen printing.

Using the prepared paste, the electrode layer 2 was laminated in a region of 5 mm radius from the center of the metal support 1 (application step). It should be noted that screen printing was used to form the electrode layer 2.

Subsequently, the metal support 1 with the laminated electrode layer 2 was degreased in air at 450°C (degreasing step).

Thereafter, the degreased metal support 1 was fired for 1 hour in a humidified nitrogen atmosphere adjusted to an oxygen partial pressure of 5.57 × 10⁻⁷ bar at a firing temperature of 1000°C (firing step).

After forming the electrode layer 2, an intermediate layer 3 was formed on the electrode layer 2. Specifically, first, a paste was prepared by adding an organic binder and an organic solvent (dispersion medium) to fine GDC powder. Using this paste, the intermediate layer 3 was laminated by screen printing in a region of 6 mm radius from the center of the metal support 1 on which the electrode layer 2 was formed. Subsequently, the metal support 1 on which the intermediate layer 3 was laminated was compression molded and fired to form an intermediate layer 3 with a flat surface (intermediate layer formation step, compression step).

Subsequently, the electrolyte layer formation step, the reaction preventing layer formation step, and the counter electrode layer formation step were performed to manufacture the metal-supported electrochemical element E according to the example.

A metal-supported electrochemical element E according to a comparative example was manufactured. The manufacturing was performed in the same manner as the example except for the points described below. In the preparation step for the manufacturing of the comparative example, no pore-forming material was added to the paste. The viscosity of the paste was adjusted to be relatively high so that the paste would not enter the through-holes 1a during the application step by screen printing. The viscosity of the paste used in the manufacturing of the comparative example was higher than the viscosity of the paste used in the example.

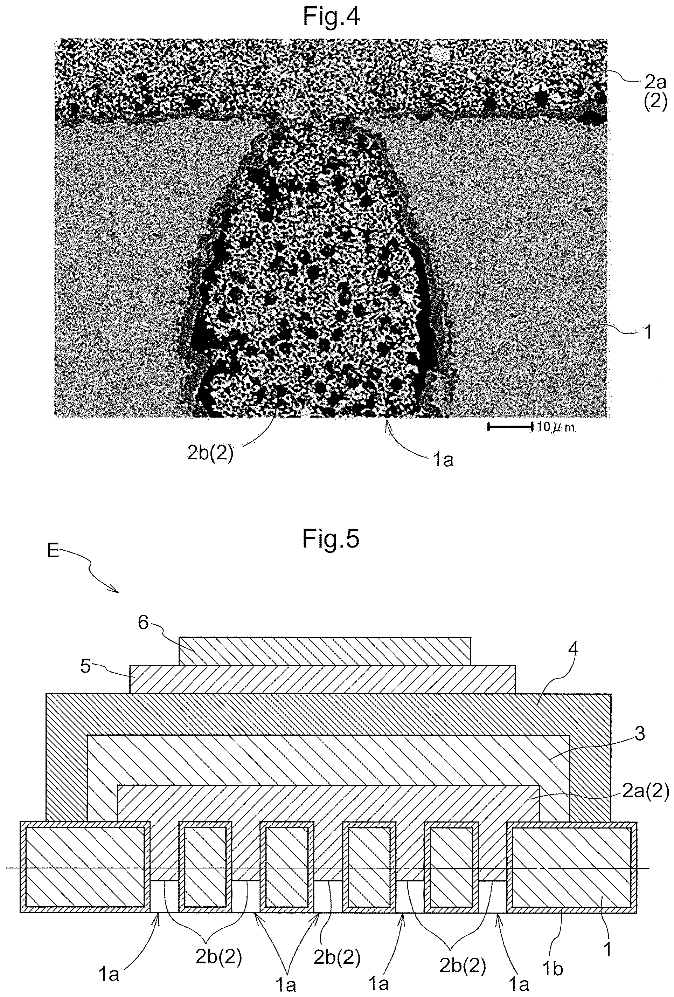

FIG. 4 is an electron microscope photograph of a cross-section of the metal-supported electrochemical element E according to the example. As shown in this photograph, in the example, the electrode layer 2 extends into the through-holes 1a of the metal support 1. That is to say, in the example, the electrode layer 2 includes a first portion 2a, which is a layered portion covering the through-holes 1a, and second portions 2b, which are continuous with the first portion 2a and extend from the first portion 2a into the through-holes 1a.

Additionally, as shown in the photograph in FIG. 4, the second portions 2b of the example have a large number of relatively large pores (the parts appearing black in the photograph). The pores in each second portion 2b are larger and more numerous than those in the first portion 2a. That is to say, in the electrode layer 2 according to the example, the porosity of the second portions 2b is higher than the porosity of the first portion 2a.

The porosity in the figure was calculated trough the following procedure. From the SEM image in the figure, the first portion 2a and the second portions 2b of the electrode layer 2 were selected as analysis regions, and the contrast of the images of the selected regions was adjusted using the image processing software "Image J" to distinguish voids from other parts as much as possible, followed by binarization processing using a contrast value that selects all black parts with high contrast recognized as voids as the threshold to identify the voids. The porosities of the first portion 2a and the second portions 2b of the electrode layer 2 were each obtained by dividing the total number of pixels corresponding to the voids by the total number of pixels in the image of the analysis region.

Electrochemical measurements (power generation voltage and diffusion resistance) were performed on the metal-supported electrochemical elements E according to the example and the comparative example. The results are shown in Table 1.

**[Table 1]**

| | Power Generation Voltage @400mA/cm²[mV] | Diffusion Resistance @400mA/cm²[mV] |
|---|---|---|
| Example | 986 | 36.4 |
| Comparative Example | 991 | 38.9 |

In the metal-supported electrochemical element E according to the example, the second portions 2b of the electrode layer 2 are present inside the through-holes 1a. Therefore, the flow of gas (e.g., fuel gas) through the through-holes 1a may be impeded by the second portions 2b, potentially degrading the power generation performance of the metal-supported electrochemical element E. However, the electrochemical measurement results shown in Table 1 indicate that the power generation performance of the example is comparable to the power generation performance of the comparative example in both power generation voltage and diffusion resistance. This indicates that the porosity of the second portions 2b is sufficiently high, and the gas flow through the through-holes 1a is not impeded.

### Modified Embodiments

[1] In the above embodiment, as shown in FIG. 1, the second portions 2b reach the surface (back surface) of the metal support 1 opposite to the surface (front surface) on which the first portion 2a is formed. As shown in FIG. 5, a configuration in which the second portions 2b do not reach the back surface may also be employed. In the example in FIG. 5, the second portions extend into the through-holes 1a beyond half the respective depths of the through-holes 1a (indicated by the dashed line in the figure). Portions of the inner surfaces of the through-holes 1a are covered by the second portions 2b of the electrode layer 2. Compared to a case where the inner surfaces of the through-holes 1a are not covered (i.e., when the second portions 2b are absent), the durability of the metal support 1 is improved, enhancing the durability of the metal-supported electrochemical element E.
[2] In the above embodiment, the metal-supported electrochemical element E is manufactured by performing the intermediate layer formation step and the reaction preventing layer formation step, and the metal-supported electrochemical element E includes the intermediate layer 3 and the reaction preventing layer 5, but the present invention is not limited to such a configuration. It is also possible to employ a configuration without the intermediate layer 3 or the reaction preventing layer 5. In a configuration without the intermediate layer 3, the electrolyte layer 4 is formed on the electrode layer 2, and in a configuration without the reaction preventing layer 5, the counter electrode layer 6 is formed on the electrolyte layer 4.
[3] In the above embodiment, the metal-supported electrochemical element E is used in a solid oxide fuel cell, but this metal-supported electrochemical element E can also be used in a solid oxide electrolytic cell, an oxygen sensor in which a solid oxide is used, or the like.

When the metal-supported electrochemical element E is operated as an electrolytic cell, a gas containing water vapor or carbon dioxide is supplied to the electrode layer 2, and a voltage is applied between the electrode layer 2 and the counter electrode layer 6. As a result, in the electrode layer 2, electrons e⁻ react with water H₂O or carbon dioxide molecules CO₂, producing hydrogen H₂ or carbon monoxide CO and oxygen ions O²⁻. The oxygen ions O²⁻ move through the electrolyte layer 4 to the counter electrode layer 6. In the counter electrode layer 6, the oxygen ions O²⁻ release electrons to form oxygen O₂. Through the above reactions, water H₂O is electrolyzed into hydrogen H₂ and oxygen O₂. When a gas containing carbon dioxide molecules CO₂ is supplied, the gas is electrolyzed into carbon monoxide CO and oxygen O₂.

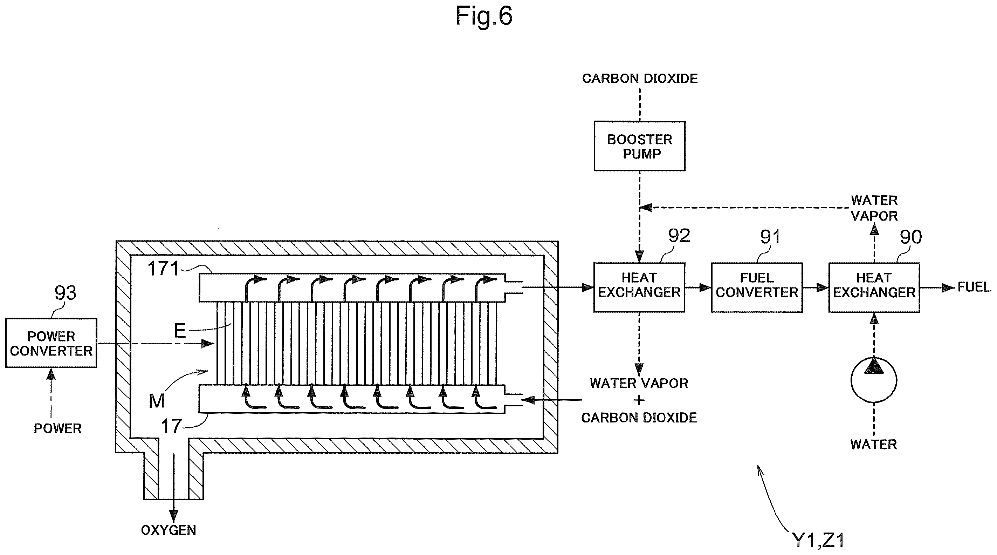

FIG. 6 shows an example of an electrochemical device Y1 and an energy system Z1 when the metal-supported electrochemical element E is operated as an electrolytic cell for gas production through the above-described electrolytic reaction. As shown in the figure, the energy system Z1 includes the electrochemical device Y1 and two heat exchangers 90 and 92 as waste heat utilization units that reuse heat discharged from the electrochemical device Y1.

In this embodiment, the electrochemical device Y1 includes the electrochemical module M, a fuel converter 91 that synthesizes hydrocarbons based on hydrogen and the like generated by the electrochemical module M, and a power converter 93 that supplies power to the electrochemical module M.

In this electrochemical device Y1, the electrochemical module M includes a plurality of metal-supported electrochemical elements E and two gas manifolds 17 and 171. The plurality of metal-supported electrochemical elements E are disposed in parallel and electrically connected to each other. The metal-supported electrochemical elements E have one end (lower end) fixed to the gas manifold 17 and the other end (upper end) fixed to the gas manifold 171. The gas manifold 17 at one end of the metal-supported electrochemical elements E receives a supply of water vapor and carbon dioxide. Hydrogen and carbon monoxide generated by the above-described reaction in the metal-supported electrochemical elements E are collected by the gas manifold 171 connected to the other end.

In addition, in this embodiment, the heat exchanger 90 is operated as a waste heat utilization unit that vaporizes water by exchanging heat between the reaction heat generated by the reaction in the fuel converter 91 and water, and the heat exchanger 92 is operated as a waste heat utilization unit that preheats water vapor and carbon dioxide by exchanging heat with the waste heat generated by the metal-supported electrochemical elements E, thereby improving energy efficiency.

The power converter 93 supplies power to the metal-supported electrochemical elements E of the electrochemical module M. This allows the metal-supported electrochemical elements E to function as electrolytic cells.

Therefore, with the above configuration, it is possible to realize the electrochemical device Y1 and the energy system Z1 capable of improving the efficiency of converting electrical energy into chemical energy of fuel or the like.

[4] In the above embodiment, a plurality of metal-supported electrochemical elements E are combined and used as an electrochemical module M, but the present invention is not limited to this configuration, and a single element can also be used.

[5] In the above embodiment, the energy systems Z and Z1 include a waste heat utilization unit that reuses the heat discharged from the electrochemical devices Y and Y1. However, the present invention is not limited to such a configuration, and an embodiment without a waste heat utilization unit may also be employed.

[6] In the above embodiment, composite materials such as NiO-GDC, Ni-GDC, NiO-YSZ, Ni-YSZ, CuO-CeO₂, or Cu-CeO₂ are used as the material for the electrode layer 2, and composite oxides such as LSCF or LSM are used as the material for the counter electrode layer 6. Hydrogen gas is supplied to the electrode layer 2 to serve as a fuel electrode (anode), and air is supplied to the counter electrode layer 6 to serve as an air electrode (cathode), thereby employing the device as a power generation cell of a solid oxide fuel cell. However, the present invention is not limited to such a configuration. Such a configuration may be modified, and the metal-supported electrochemical element E may also be configured in such a manner that the electrode layer 2 serves as the air electrode and the counter electrode layer 6 serves as the fuel electrode. That is to say, composite oxides such as LSCF or LSM are used as the material for the electrode layer 2, and composite materials such as NiO-GDC, Ni-GDC, NiO-YSZ, Ni-YSZ, CuO-CeO₂, or Cu-CeO₂ are used as the material for the counter electrode layer 6. With the metal-supported electrochemical element E with such a configuration, air can be supplied to the electrode layer 2 to serve as the air electrode, and hydrogen gas can be supplied to the counter electrode layer 6 to serve as the fuel electrode, thereby enabling the use of the metal-supported electrochemical element E as a power generation cell of a solid oxide fuel cell.

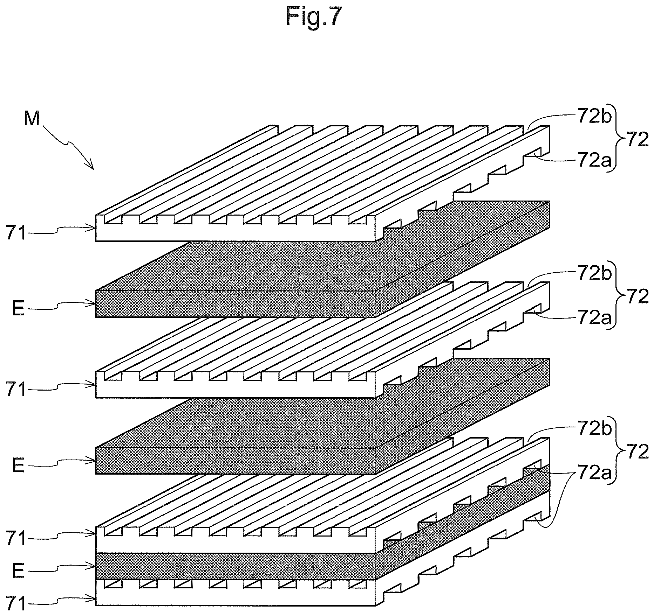

[7] In the above embodiment, the electrochemical module M includes metal-supported electrochemical elements E in each of which a tubular support is formed by a metal support 1 and a U-shaped member 9 attached to the back surface of the metal support 1, but the present invention is not limited to such a configuration. For example, as shown in FIG. 7, the metal-supported electrochemical elements E may be stacked with intercell connection members 71 interposed therebetween, thereby forming an electrochemical module M.

In this case, each intercell connection member 71 is plate-like member with electrical conductivity and no gas permeability, and grooves 72 that are orthogonal to each other are formed on the front and back surfaces thereof, respectively. The intercell connection members 71 can be made of a metal such as stainless steel or a metal oxide.

When the metal-supported electrochemical elements E are stacked with the intercell connection members 71 sandwiched therebetween, gas can be supplied to the metal-supported electrochemical elements E through the grooves 72. Specifically, the grooves 72 formed on one surface serve as first gas passages 72a, which supply gas to the front side of the corresponding metal-supported electrochemical element E, i.e., the counter electrode layer 6. The grooves 72 formed on the other surface serve as second gas passages 72b, which supply gas from the back side of the corresponding metal-supported electrochemical element E, i.e., the back surface of the metal support 1, to the electrode layer 2 through the through-holes 1a.

When the electrochemical module M with such a configuration is operated as a power generation cell for a solid oxide fuel cell, air is supplied to the first gas passages 72a, and hydrogen is supplied to the second gas passages 72b. As a result, a power generation reaction proceeds in the metal-supported electrochemical elements E, and electromotive force and current are generated. The generated power is extracted to the outside of the electrochemical module M from the intercell connection members 71 at the two ends of the stacked metal-supported electrochemical elements E.

It should be noted that the grooves 72 formed on the front and back surfaces of each intercell connection member 71 may be parallel to each other.

[8] In the above embodiment, the metal-supported electrochemical elements E are mainly used in flat or flat cylindrical solid oxide fuel cells. However, the present invention is not limited to such configurations and may also be applied to elements such as cylindrical solid oxide fuel cells.

[9] In the above embodiment, the electrochemical device Y includes an electrochemical module M having a plurality of metal-supported electrochemical elements E. However, the present invention is not limited to such a configuration. For example, the electrochemical device may include a single metal-supported electrochemical element E.

The configurations disclosed in the above embodiments (including the modified embodiments, the same applies hereinafter) can be applied in combination with configurations disclosed in other embodiments as long as no contradictions arise. Additionally, the embodiments disclosed in this specification are illustrative, and the embodiments of the present invention are not limited thereto and can be appropriately modified without departing from the scope of the present invention.

### Description of Reference Signs

1: Metal support
1a: Through-hole
1b: Metal oxide film (Diffusion preventing layer)
2: Electrode layer
3: Intermediate layer
4: Electrolyte layer
5: Reaction preventing layer
6: Counter electrode layer
31: Desulfurizer (Fuel converter)
34: Reformer (Fuel converter)
38: Inverter (Power converter)
53: Heat exchanger (Waste heat utilization unit)
90, 92: Heat exchanger (Waste heat utilization unit)
91: Fuel converter
93: Power converter
E: Metal-supported electrochemical element
M: Electrochemical module
Y, Y1: Electrochemical device
Z, Z1: Energy system

## Claims

1. A method for manufacturing an electrochemical element by forming an electrode layer on a metal support having through-holes, comprising:
a preparation step of preparing a paste that contains a material of the electrode layer and a pore-forming material;
an application step of applying the paste to a surface of the metal support in such a manner that the paste enters the through-holes;
a firing step of firing the metal support to which the paste has been applied; and
a compression step of compressing a layer of the paste that has been applied or the electrode layer that has been fired.

2. The method for manufacturing an electrochemical element according to claim 1,
wherein, in the preparation step, the paste is adjusted to have a viscosity that is low enough for the paste to enter the through-holes during execution of the application step.

3. The method for manufacturing an electrochemical element according to claim 1,
wherein the firing step is performed under an atmosphere where oxygen has a partial pressure of 4.0 × 10⁻⁸ bar or higher and 4.0 × 10⁻⁶ bar or lower.

4. The method for manufacturing an electrochemical element according to claim 3,
wherein the firing step is performed under an atmosphere of an inert gas that has been humidified.

5. The method for manufacturing an electrochemical element according to claim 4,
wherein the inert gas is nitrogen.

6. The method for manufacturing an electrochemical element according to claim 1,
wherein the firing step is performed at a temperature of 800°C or higher and 1100°C or lower.

7. The method for manufacturing an electrochemical element according to claim 1, further comprising:
a degreasing step of removing an oil component before the firing step.

8. The method for manufacturing an electrochemical element according to claim 7,
wherein the degreasing step is performed at a temperature of 150°C or higher and 650°C or lower.

9. An electrochemical element comprising:
a metal support having through-holes; and
an electrode layer formed on the metal support,
wherein the electrode layer includes:
a first portion that is a layered portion covering the through-holes; and
second portions that are continuous with the first portion and extend from the first portion into the through-holes, and
the second portions have a larger porosity than the first portion.

10. The electrochemical element according to claim 9,
wherein the second portions extend into the through-holes beyond half their respective depths.

11. The electrochemical element according to claim 9,
wherein the second portions reach a surface of the metal support opposite to a surface on which the first portion is formed.

12. The electrochemical element according to claim 9,
wherein the first portion has a porosity of 5% or more, and the second portions have a porosity of 20% or more.

13. The electrochemical element according to claim 9,
wherein the electrode layer is formed on a diffusion preventing layer formed on the metal support.

14. The electrochemical element according to claim 13,
wherein the diffusion preventing layer has a thickness of 3 µm or less.

15. The electrochemical element according to any one of claims 9 to 14, further comprising:
an electrolyte layer disposed on the electrode layer; and
a counter electrode layer disposed on the electrolyte layer.

16. The electrochemical element according to claim 15, further comprising:
an intermediate layer between the electrode layer and the electrolyte layer.

17. An electrochemical module comprising an assembly of a plurality of electrochemical elements according to claim 9.

18. A solid oxide fuel cell comprising the electrochemical element according to claim 9 and configured to cause a power generation reaction in the electrochemical element.

19. A solid oxide electrolytic cell comprising the electrochemical element according to claim 9 and configured to cause an electrolytic reaction in the electrochemical element.

20. An electrochemical device comprising at least:
the electrochemical element according to claim 9 or the electrochemical module according to claim 17; and
a fuel converter configured to generate a reducible component to be supplied to the electrochemical element or the electrochemical module, or convert a gas containing a reducible component generated by the electrochemical element or the electrochemical module.

21. An electrochemical device comprising at least:
the electrochemical element according to claim 9 or the electrochemical module according to claim 17; and
a power converter configured to extract power from the electrochemical element or the electrochemical module, or supply power to the electrochemical element or the electrochemical module.

22. An energy system comprising at least:
the electrochemical device according to claim 20; and
a waste heat utilization unit configured to reuse heat discharged from the electrochemical device.

23. An energy system comprising at least:
the electrochemical device according to claim 21; and
a waste heat utilization unit configured to reuse heat discharged from the electrochemical device.
